(19) Europäisches Patentamt
European Patent Office
Office européen des brevets

(11) EP 3 317 346 B1

(12) **FASCICULE DE BREVET EUROPEEN**

(45) Date de publication et mention de la délivrance du brevet:
**04.03.2020 Bulletin 2020/10**

(21) Numéro de dépôt: **16734358.1**

(22) Date de dépôt: **30.06.2016**

(51) Int Cl.:
***C08L 9/06*** *(2006.01)* ***B60C 1/00*** *(2006.01)*
***C08L 57/02*** *(2006.01)* ***C08K 3/36*** *(2006.01)*

(86) Numéro de dépôt international:
**PCT/EP2016/065408**

(87) Numéro de publication internationale:
**WO 2017/001616 (05.01.2017 Gazette 2017/01)**

(54) **COMPOSITION DE CAOUTCHOUC COMPRÉNANT UNE SILICE DE TRÈS HAUTE SURFACE SPÉCIFIQUE ET UNE RÉSINE HYDROCARBONÉE DE FAIBLE TEMPÉRATURE DE TRANSITION VITREUSE**

KAUTSCHUKZUSAMMENSETZUNG MIT EINER SEHR HOHEN SPEZIFISCHEN OBERFLÄCHE AUS KIESELSÄURE UND EINEM KOHLENWASSERSTOFFHARZ MIT NIEDRIGER GLASÜBERGANGSTEMPERATUR

RUBBER COMPOSITION COMPRISING A VERY HIGH SPECIFIC SURFACE AREA SILICA AND A LOW GLASS TRANSITION TEMPERATURE HYDROCARBON RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 FR 1556233**

(43) Date de publication de la demande:
**09.05.2018 Bulletin 2018/19**

(73) Titulaire: **Compagnie Générale des Etablissements Michelin**
**63000 Clermont-Ferrand (FR)**

(72) Inventeur: **LABRUNIE, Philippe**
**63040 Clermont-Ferrand Cedex 9 (FR)**

(74) Mandataire: **Sidhu, Alban**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 740 757** **EP-A1- 2 743 301**
**WO-A1-2012/084847** **FR-A1- 2 974 808**

- **DATABASE WPI Week 201244 Thomson Scientific, London, GB; AN 2012-H52030 XP002757704, & JP 2012 121966 A (SUMITOMO RUBBER IND LTD) 28 juin 2012 (2012-06-28)**
- **DATABASE WPI Week 201249 Thomson Scientific, London, GB; AN 2012-J36009 XP002757705, & JP 2012 136581 A (SUMITOMO RUBBER IND LTD) 19 juillet 2012 (2012-07-19)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 317 346 B1

## Description

L'invention est relative aux compositions, notamment pour pneumatiques et plus particulièrement aux compositions comprenant un système plastifiant à base de résine de faible température de transition vitreuse (Tg) et une silice spécifique comme charge renforçante.

Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique.

Dans le domaine des charges renforçantes, ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

En particulier, le document WO2003/016387 décrit des compositions utilisant une silice de très haute surface spécifique, c'est-à-dire présentant une surface spécifique CTAB supérieure à 170 $m^2/g$ et notamment comprise entre 170 et 250 $m^2/g$.

De manière usuelle dans les pneumatiques du commerce, une silice HD à haute surface spécifique faisant référence dans le domaine des "Pneus Verts" est en particulier la silice "Zeosil 1165 MP" (surface BET égale à environ 160 $m^2/g$) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 m2/g, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Dans le domaine des plastifiants et en particulier des résines plastifiantes, les Demanderesses ont déjà décrit l'utilisation de résines de haute Tg, comme décrit dans les documents WO-2005/087859 ou WO-2006/061064.

Quelques documents décrivent l'utilisation de résines de faible Tg, comme par exemple dans le document JP-2005213486 qui propose l'utilisation de résine de faible Tg à un taux compris entre 0,5 et 5 pce pour améliorer le collant à cru et la faisabilité industrielle des compositions. Le document US-2007/0167557 propose l'utilisation de résine de faible Tg à un taux de 10 pce pour améliorer la résistance à l'écaillement. Quant au document JP-2001144262, il décrit des compositions dont la résistance à l'abrasion et l'adhérence sont améliorées, et qui comprennent des résines de faible Tg. Egalement, le document EP-2740757 décrit une composition comprenant un élastomère diénique, entre 40 et 120 pce de silice de surface spécifique de 170 à 270 $m^2/g$ et entre 0,5 et 20 pce de résine de faible Tg.

Néanmoins, les manufacturiers cherchent toujours des solutions pour améliorer en même temps toutes les performances des compositions pour pneumatique et notamment la résistance au roulement et l'adhérence sur sol sec, en même temps que la dureté des compositions cuites, associée au comportement routier et au confort de conduite.

A présent, les Demanderesses ont montré que des compositions particulières à base de résine de faible Tg, et de silice de très haute surface spécifique permettaient d'avoir un compromis amélioré, et une synergie entre de nombreuses performances recherchées pour les compositions de pneumatique, c'est-à-dire la résistance au roulement, l'adhérence sur sol sec, et la dureté des compositions cuites.

L'invention concerne donc une composition de caoutchouc à base d'au moins un élastomère diénique, une charge renforçante, un système de vulcanisation et un système plastifiant, ladite charge renforçante comprenant majoritairement en poids une silice dite de très haute surface spécifique, de surface spécifique CTAB supérieure à 170 $m^2/g$ et ledit système plastifiant comprenant un taux compris dans un domaine allant de 25 à 90 pce (parties en poids pour cent parties en poids d'élastomère) d'une résine hydrocarbonée présentant une température de transition vitreuse (Tg) comprise entre -40°C et 20°C.

De préférence, l'invention concerne une composition telle que définie ci-dessus, dans laquelle ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. Préférentiellement, ledit élastomère diénique est choisi dans le groupe constitué par les polybutadiènes, les copolymères de butadiène et de styrène, et les mélanges de ces élastomères.

De préférence également, l'invention concerne une composition telle que définie ci-dessus, dans laquelle le taux de charge renforçante est compris dans un domaine allant de 30 à 200 pce, de préférence de 45 à 170 pce, mieux, de 50 à 150 pce.

Préférentiellement, l'invention concerne une composition telle que définie ci-dessus, dans laquelle le taux de silice de très haute surface spécifique est compris dans un domaine allant de 25 à 180 pce, de préférence de 40 à 160 pce, mieux, de 50 à 140 pce. De préférence, la silice de très haute surface spécifique présente une surface spécifique CTAB comprise dans un domaine allant de 170 à 250 $m^2/g$, de préférence de 180 à 240 $m^2/g$. De préférence également, la silice de très haute surface spécifique présente une surface spécifique BET comprise dans un domaine allant de 170 à 320 $m^2/g$, de préférence de 200 à 300 $m^2/g$. Préférentiellement également, la silice de très haute surface spécifique présente une taille moyenne (en masse) de particules, notée dw, comprise dans un domaine allant de 20 à 300 nm, de préférence de 40 à 150 nm. Préférentiellement encore, la silice de très haute surface spécifique présente une distribution de taille de particules dw telle que $dw \geq (16\,500 / CTAB) - 30$. De manière préférentielle également, la silice de très haute surface spécifique présente une porosité vérifiant le critère $L / IF \geq -0{,}0025\ CTAB + 0{,}85$.

De préférence, l'invention concerne une composition telle que définie ci-dessus, qui comprend du noir de carbone comme charge renforçante minoritaire. Préférentiellement, le taux de noir de carbone est compris entre 0 et 30 pce, de préférence dans un domaine allant de 1 à 10 pce, de préférence de 1 à 5 pce.

Préférentiellement, la résine hydrocarbonée précédemment mentionnée comme résine hydrocarbonée de Tg comprise entre -40°C et 20°C présente une Tg comprise entre -40°C et 0°C, plus préférentiellement entre -30°C et 0°C et plus préférentiellement encore entre -20°C et 0°C. Préférentiellement également, la résine hydrocarbonée précédemment mentionnée comme résine hydrocarbonée de Tg comprise entre -40°C et 20°C présente une masse moléculaire moyenne en nombre inférieure à 800 g/mol, de préférence inférieure à 600 g/mol, plus préférentiellement inférieure à 400 g/mol. Préférentiellement encore, la résine hydrocarbonée précédemment mentionnée comme résine hydrocarbonée de Tg comprise entre -40°C et 20°C présente un point de ramollissement compris dans un domaine allant de 0 à 50°C, préférentiellement de 0 à 40°C, plus préférentiellement de 10 à 40°C, de préférence de 10 à 30°C. Selon un mode préférentiel, la résine hydrocarbonée précédemment mentionnée comme résine hydrocarbonée de Tg comprise entre -40°C et 20°C présente un indice de polymolécularité (Ip) inférieur à 3, de préférence inférieur à 2.

De préférence, l'invention concerne une composition telle que définie ci-dessus, qui comprend en outre dans le système plastifiant une huile plastifiante. Préférentiellement, l'huile plastifiante est choisie dans le groupe constitué par les huiles naphténiques, les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Préférentiellement également, le taux d'huile plastifiante est compris dans un domaine allant de 2 à 50 pce, de préférence de 5 à 30 pce.

De préférence également, l'invention concerne une composition telle que définie ci-dessus, qui comprend en outre dans la combinaison de plastifiants, une résine de Tg supérieur à 20°C. Préférentiellement, le taux de résine hydrocarbonée de Tg supérieure à 20°C est compris dans un domaine allant de 5 à 80 pce, de préférence de 7 à 70 pce, mieux, de 10 à 65 pce. De manière préférentielle, la résine hydrocarbonée précédemment mentionnée comme résine hydrocarbonée de Tg supérieure à 20°C présente une Tg supérieure à 30°C. Préférentiellement, la résine hydrocarbonée précédemment mentionnée comme résine hydrocarbonée de Tg supérieure à 20°C présente une masse moléculaire moyenne en nombre comprise entre 400 et 2000 g/mol, de préférence entre 500 et 1500 g/mol. Préférentiellement également, la résine hydrocarbonée précédemment mentionnée comme résine hydrocarbonée de Tg supérieure à 20°C présente un indice de polymolécularité (Ip) inférieur à 3, de préférence inférieur à 2.

Préférentiellement, l'invention concerne une composition telle que définie ci-dessus, dans laquelle le taux total de plastifiants est supérieur ou égal à 25 pce, de préférence compris dans un domaine allant de 45 à 120 pce, plus préférentiellement de 50 à 100 pce, mieux, de 50 à 90 pce.

Préférentiellement également, l'invention concerne une composition telle que définie ci-dessus, dans laquelle les taux de charge renforçante et de plastifiant sont tels que le rapport du taux total de charge sur le taux total de plastifiant est compris dans un domaine allant de 1,3 à 2, de préférence de 1,3 à 1,8, mieux, de 1,4 à 1,7.

Egalement, l'invention concerne un pneumatique comprenant une composition telle que définie ci-dessus, de préférence dans lequel ladite composition représente tout ou partie de la bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

I- Constituants de la composition

Les compositions de caoutchouc selon l'invention sont à base d'au moins un élastomère diénique, une charge renforçante, un système de vulcanisation et un système plastifiant, ladite charge renforçante comprenant majoritairement en poids une silice dite de très haute surface spécifique, de surface spécifique CTAB supérieure à 170 $m^2/g$ et ledit système plastifiant comprenant un taux compris dans un domaine allant de 25 à 90 pce (parties en poids pour cent parties en poids d'élastomère) d'une résine hydrocarbonée présentant une température de transition vitreuse (Tg) comprise entre -40°C et 20°C.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Dans la présente demande, lorsqu'il est fait référence à un rapport des quantités d'un composé A et d'un composé B, ou un rapport entre le taux d'un composé A et le taux d'un composé B, il s'agit toujours du rapport au sens mathématique de la quantité de composé A sur la quantité de composé B.

1-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:

(a) tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères

obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation particulier, la composition comporte de 50 à 100 pce d'un élastomère SBR, qu'il

s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Préférentiellement, selon un autre mode de réalisation, la composition de caoutchouc comprend de façon majoritaire (c'est-à-dire avec le taux massique le plus élevé), un élastomère diénique non isoprénique. Par « élastomère diénique non isoprénique », doit être compris au sens de la présente demande un élastomère issu au moins en partie (i.e., un homopolymère ou un copolymère) de monomères diènes (monomères porteurs de deux doubles liaisons carbone-carbone) autres que l'isoprène. Ainsi, les élastomères diéniques non isopréniques au sens de la présente définition, comprennent donc également des copolymères comprenant de l'isoprène à titre de co-monomère. Le caoutchouc naturel et les homopolymères isopréniques (c'est-à-dire constitués de monomères isoprène fonctionnalisés ou non) sont exclus de la présente définition. Selon ce mode préférentiel de réalisation, tous les élastomères cités précédemment à l'exception du caoutchouc naturel et des polyisoprènes conviennent à titre d'élastomère diénique non isoprénique. Notamment, on pourra utiliser les élastomères diéniques non isopréniques choisis préférentiellement dans le groupe des élastomères diéniques fortement insaturés constitué par les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Toujours selon ce mode de réalisation préférentiel, on comprendra qu'en cas de coupage d'élastomères, le taux total des élastomères dits « non isopréniques » doit être supérieur au taux total des élastomères choisis dans le groupe constitué par le caoutchouc naturel, les polyisoprènes de synthèse et leurs mélanges. Préférentiellement selon ce mode de réalisation, le taux d'élastomère diénique non isoprénique est de plus de 50 pce, plus préférentiellement d'au moins 60 pce, de manière plus préférentielle d'au moins 70 pce, plus préférentiellement encore d'au moins 80 pce et de manière très préférentielle d'au moins 90 pce. En particulier selon ce mode de réalisation, le taux d'élastomère diénique non isoprénique est très préférentiellement de 100 pce.

Selon un autre mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### I-2 Charge renforçante

La composition selon l'invention comprend comme charge renforçante majoritaire une silice de très haute

surface spécifique telle que définie ci-dessous. En complément, la composition peut comprendre une autre charge renforçante, comme charge renforçante minoritaire.

1-2.1 Silice de très haute surface spécifique

Caractérisation des silices

Les silices décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule primaire") éventuelle pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles. Ces silices sont caractérisées comme indiqué ci-après.

- Surface spécifique :

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage : 1heure à 160°C - domaine de pression relative p/po : 0.05 à 0.17]

La surface spécifique CTAB est la surface externe déterminée selon la norme française NF T 45-007 de novembre 1987 (méthode B).

- Granulométrie :

La taille moyenne (en masse) des particules, notée dw, est mesurée de manière classique après dispersion, par désagglomération aux ultrasons, de la charge à analyser dans l'eau. La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.

On réalise une suspension de 3,2 g d'échantillon de silice à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules est calculée par le logiciel du sédimentomètre "XDC". La moyenne géométrique en masse des tailles de particules ("géométrie mean (Xg)" selon l'appellation du logiciel), notée dw, est calculée par le logiciel à partir de l'équation suivante, dans laquelle mi représente la masse de l'ensemble des objets dans la classe de diamètre di

$$\log d_w = \frac{\sum_{i=1}^{n} m_i \log d_i}{\sum_{i=1}^{n} m_i},$$

- Porosimétrie :

Le paramètre L/IF caractérisant la largeur de distribution de taille de pore est déterminé par porosimétrie au mercure. La mesure est réalisée à l'aide des porosimètres PASCAL 140 et PASCAL 440 commercialisés par Thermo-Finnigan, en opérant de la façon suivante : une quantité d'échantillon comprise entre 50 et 500 mg (dans le cas présent 140 mg) est introduite dans une cellule de mesure. Cette cellule de mesure est installée sur le poste de mesure de l'appareil PASCAL 140. L'échantillon est ensuite dégazé sous vide, pendant le temps nécessaire pour atteindre une pression de 0,01 kPa (typiquement de l'ordre de 10 minutes). La cellule de mesure est ensuite remplie de mercure. La première partie (pressions inférieures à 400 kPa) de la courbe d'intrusion du mercure Vp= f(P), où Vp est le volume d'intrusion du mercure et P la pression appliquée, est déterminée sur le porosimètre PASCAL 140. La cellule de mesure est ensuite installée sur le poste de mesure du porosimètre PASCAL 440, la deuxième partie de la courbe d'intrusion

du mercure Vp= f(P) (pressions comprises entre 100 kPa et 400 MPa) étant déterminée sur le porosimètre PASCAL 440. Les porosimètres sont utilisés en mode «PASCAL», de façon à ajuster en permanence la vitesse d'intrusion du mercure en fonction des variations du volume d'intrusion. Le paramètre de vitesse en mode «PASCAL » est fixé à 5. Les rayons de pore Rp sont calculés à partir des valeurs de pression P à l'aide de la relation de Washbum, rappelée ci-après, avec une hypothèse de pores cylindriques, en choisissant un angle de contact $\theta$ égal à 140° et une tension superficielle $\gamma$ égale à 480 dynes/cm.

$$R_p = \frac{-2\gamma\cos\theta}{P}$$

Relation de Washbum :

Les volumes poreux Vp sont rapportés à la masse de silice introduite et exprimés en cm3/g. Le signal Vp= f(Rp) est lissé en combinant un filtre logarithmique (paramètre de filtre «smooth dumping factor » F = 0,96) et un filtre à moyenne mobile (paramètre de filtre «number of points to average » f = 20). La distribution de taille de pore est obtenue en calculant la dérivée dVp/dRp de la courbe d'intrusion lissée.

Par définition, l'indice de finesse IF est la valeur de rayon de pore (exprimée en angströms) correspondant au maximum de la distribution de taille de pore dVp/dRp. On note L la largeur à mi-hauteur de la distribution de taille de pore dVp/dRp. La largeur de distribution de taille de pore de l'échantillon est alors caractérisée à l'aide du paramètre L/IF.

- Chimie de surface :

Le nombre de silanols par nm2 est déterminé par greffage de méthanol sur la surface de la silice. Dans un premier temps, une quantité d'environ 1 g de silice brute est mise en suspension dans 10 ml de méthanol, dans un autoclave de 110 ml (Top Industrie, Réf : 09990009).

Un barreau aimanté est introduit et le réacteur, fermé hermétiquement et calorifugé, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol. Le nombre de silanols par nm2 est calculé à l'aide de la formule suivante :

$$N_{SiOH/nm^2} = \frac{(\%_{C_g} - \%_{C_b}) \times 6.023 \times 10^{23}}{S_{spé} \times 10^{18} \times 12 \times 100}$$

dans laquelle NSiOH/nm2 représente le nombre de silanols par nm2 ($SiOH/nm^2$), %Cg représente le pourcentage massique de carbone présent sur la silice greffée, %Cb représente le pourcentage massique de carbone présent sur la silice brute et Sspé représente la surface spécifique BET de la silice ($m^2/g$).

Silice de très haute surface spécifique :

Majoritairement la composition selon l'invention comprend comme charge renforçante, une silice présentant une surface spécifique CTAB supérieure à 170 $m^2/g$. De manière préférentielle, la surface spécifique de la silice est comprise dans un domaine allant de 170 $m^2/g$ à 250 $m^2/g$, et plus préférentiellement de 180 à 240 $m^2/g$.

De préférence également, la silice de très haute surface spécifique présente une surface spécifique BET comprise dans un domaine allant de 170 à 320 $m^2/g$, plus préférentiellement de 200 à 300 $m^2/g$.

De manière préférentielle, les silices de très haute surface spécifique présentent avantageusement également une taille moyenne (en masse) de particules, notée dw, allant de 20 à 300 nm, et au moins l'une des caractéristiques suivantes, de préférence deux et plus préférentiellement les trois :

- une distribution de taille de particules telle que dw ≥ (16 500 / CTAB) - 30 ;
- une porosité vérifiant le critère L / IF ≥ -0,0025 CTAB + 0,85 ;
- un taux de silanols par unité de surface, noté NSiOH/nm2 , tel que NSiOH/nm2 ≤ -0,027 CTAB + 10,5.

Par exemple, la silice spécifique mise en oeuvre dans les compositions conformes à l'invention présente une

taille moyenne de particules, notée dw, allant de 40 à 150 nm.

Les silices de très haute surface spécifique utilisées comme charge renforçantes dans les compositions selon l'invention peuvent présenter une certaine microporosité ; ainsi, les silices utilisées selon l'invention sont préférentiellement telles que (SBET - SCTAB) ≥ 5 $m^2/g$, de préférence ≥ 15 $m^2/g$, par exemple ≥ 20 $m^2/g$. Cette microporosité n'est pas en général trop importante ; les silices utilisées selon l'invention sont préférentiellement telles que (SBET - SCTAB) < 50 $m^2/g$, de préférence < 40 $m^2/g$.

D'une manière préférentielle, le taux de silice de très haute surface spécifique est compris dans un domaine allant de 25 à 180 pce, de préférence de 40 à 160 pce de plus préférentiellement de 50 à 140 pce. En dessous de 25 pce de silice de très haute surface spécifique, la composition pourrait être moins performante en résistance à l'usure tandis qu'au-dessus de 180 pce de silice de très haute surface spécifique, la composition pourrait être moins performante en résistance au roulement.

Préparation des silices de très haute surface spécifique

Une telle silice de très haute surface spécifique peut notamment être préparée selon le protocole décrit dans la demande de brevet WO2003/016387. Ce procédé comprend la réaction d'un silicate avec un agent acidifiant ce par quoi l'on obtient une suspension de silice, puis la séparation et le séchage de cette suspension. Ce procédé est caractérisé en ce que la réaction du silicate avec l'agent acidifiant est réalisée selon les étapes successives suivantes :

(α) on forme un pied de cuve aqueux présentant un pH compris entre 2 et 5,

(β) on ajoute audit pied de cuve, simultanément, du silicate et de l'agent acidifiant, de telle manière que le pH du milieu réactionnel soit maintenu entre 2 et 5,

(γ) on arrête l'addition de l'agent acidifiant tout en continuant l'addition de silicate dans le milieu réactionnel jusqu'à l'obtention d'une valeur du pH du milieu réactionnel comprise entre 7 et 10,

(δ) on ajoute au milieu réactionnel, simultanément, du silicate et de l'agent acidifiant, de telle manière que le pH du milieu réactionnel soit maintenu entre 7 et 10,

(ε) on arrête l'addition du silicate tout en continuant l'addition de l'agent acidifiant dans le milieu réactionnel jusqu'à l'obtention d'une valeur du pH du milieu réactionnel inférieure à 6.

Le choix de l'agent acidifiant et du silicate se fait d'une manière bien connue en soi. On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique. L'agent acidifiant peut être dilué ou concentré ; sa normalité peut être comprise entre 0,4 et 36 N, par exemple entre 0,6 et 1,5 N. En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium. Le silicate peut présenter une concentration (exprimée en SiO2) comprise entre 40 et 330 g/l, par exemple entre 60 et 300 g/l, en particulier entre 60 et 260 g/l. De manière générale, on emploie, comme agent acidifiant, l'acide sulfurique, et, comme silicate, le silicate de sodium. Dans le cas où l'on utilise le silicate de sodium, celui-ci présente, en général, un rapport pondéral SiO2/Na2O compris entre 2,5 et 4, par exemple entre 3,2 et 3,8.

La réaction du silicate avec l'agent acidifiant se fait d'une manière préférentielle selon les étapes suivantes : On forme tout d'abord un pied de cuve aqueux présentant un pH compris entre 2 et 5. De préférence, le pied de cuve formé présente un pH compris entre 2,5 et 5, notamment entre 3 et 4,5 ; ce pH est par exemple compris entre 3,5 et 4,5.

Le pied de cuve formé dans l'étape (α) peut éventuellement comprendre un électrolyte. Néanmoins, de préférence, aucun électrolyte n'est ajouté au cours du procédé de préparation, en particulier dans l'étape (α).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La deuxième étape (étape (β)) consiste en une addition simultanée d'agent acidifiant et de silicate, de telle manière (en particulier à des débits tels) que le pH du milieu réactionnel soit maintenu entre 2 et 5, de préférence entre

2,5 et 5, notamment entre 3 et 4,5, par exemple entre 3,5 et 4,5. Cette addition simultanée est avantageusement réalisée de manière telle que la valeur du pH du milieu réactionnel soit constamment égale (à ± 0,2 près) à celle atteinte à l'issue de l'étape initiale (α).

Puis, dans une étape (γ), on arrête l'addition de l'agent acidifiant tout en continuant l'addition de silicate dans le milieu réactionnel de manière à obtenir une valeur du pH du milieu réactionnel comprise entre 7 et 10, de préférence entre 7,5 et 9,5. Il peut alors être avantageux d'effectuer juste après cette étape (γ) et donc juste après l'arrêt de l'addition de silicate, un mûrissement du milieu réactionnel, notamment au pH obtenu à l'issue de l'étape (γ), et en général sous agitation ; ce mûrissement peut par exemple durer de 2 à 45 minutes, en particulier de 5 à 25 minutes et ne comporte préférentiellement ni addition d'agent acidifiant, ni addition de silicate.

Après l'étape (γ) et l'éventuel mûrissement, on procède à une nouvelle addition simultanée d'agent acidifiant et de silicate (étape (δ)), de telle manière (en particulier à des débits tels) que le pH du milieu réactionnel soit maintenu entre 7 et 10, de préférence entre 7,5 et 9,5. Cette seconde addition simultanée (étape (δ)) est avantageusement réalisée de manière telle que la valeur du pH du milieu réactionnel soit constamment égale (à ± 0,2 près) à celle atteinte à l'issue de l'étape précédente.

Il est à noter que l'on peut, entre l'étape (γ) et l'étape (δ), par exemple entre, d'une part, l'éventuel mûrissement suivant l'étape (γ), et, d'autre part, l'étape (δ), ajouter au milieu réactionnel de l'agent acidifiant, le pH du milieu réactionnel à l'issue de cette addition d'agent acidifiant étant cependant compris entre 7 et 9,5, de préférence entre 7,5 et 9,5.

Enfin, dans une étape (ε), on arrête l'addition du silicate tout en continuant l'addition d'agent acidifiant dans le milieu réactionnel de manière à obtenir une valeur du pH du milieu réactionnel inférieure à 6, de préférence comprise entre 3 et 5,5, en particulier entre 3 et 5, par exemple entre 3 et 4,5.

Il peut alors être avantageux d'effectuer après cette étape (ε) et donc juste après l'arrêt de l'addition d'agent acidifiant, un mûrissement du milieu réactionnel, notamment au pH obtenu à l'issue de l'étape (ε), et en général sous agitation ; ce mûrissement peut par exemple durer de 2 à 45 minutes, en particulier de 5 à 20 minutes et ne comporte préférentiellement ni addition d'agent acidifiant, ni addition de silicate.

L'enceinte réactionnelle dans laquelle est mis en oeuvre l'ensemble de la réaction du silicate avec l'agent acidifiant est habituellement muni d'un équipement d'agitation et d'un équipement de chauffage adéquats. L'ensemble de la réaction du silicate avec l'agent acidifiant est généralement réalisé entre 70 et 95 °C, en particulier entre 75 et 90 °C. Selon une variante de l'invention, l'ensemble de la réaction du silicate avec l'agent acidifiant est effectué à une température constante, habituellement comprise entre 70 et 95 °C, en particulier entre 75 et 90 °C. Selon une autre variante de l'invention, la température de fin de réaction est plus élevée que la température de début de réaction : ainsi, on maintient la température au début de la réaction (par exemple au cours des étapes (α) à (γ)) de préférence entre 70 et 85 °C, puis on augmente la température, de préférence jusqu'à une valeur comprise entre 85 et 95 °C, valeur à laquelle elle est maintenue (par exemple au cours des étapes (δ) et (ε), jusqu'à la fin de la réaction.

On obtient, à l'issue des étapes qui viennent d'être décrites, une bouillie de silice qui est ensuite séparée (séparation liquide-solide). La séparation mise en oeuvre dans ce procédé de préparation comprend habituellement une filtration, suivie d'un lavage si nécessaire. La filtration s'effectue selon toute méthode convenable, par exemple au moyen d'un filtre presse, d'un filtre à bande ou d'un filtre sous vide.

La suspension de silice ainsi récupérée (gâteau de filtration) est ensuite séchée. Ce séchage peut se faire selon tout moyen connu en soi. De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines. Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement. Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre. Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel qu'eau, suspension de silice...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits

pulvérulents de manière à éliminer l'air inclus dans ceux-ci et assurer un compactage plus régulier. La silice susceptible d'être alors obtenue par cette étape d'agglomération se présente généralement sous la forme de granulés.

Les poudres, de même que les billes, de silice obtenue par le procédé décrit plus haut offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Ce procédé de préparation permet d'obtenir des silices précipitées, qui, d'une part, sont non friables, ce qui est avantageux du point de vue de la manipulation et du transport des produits sur les installations industrielles, et, d'autre part, présentent généralement une aptitude satisfaisante à la dispersion (dispersibilité) dans les polymères, confèrent à ceux-ci un compromis de propriétés très satisfaisant, en particulier au niveau de leurs propriétés rhéologiques et dynamiques, et possèdent un bon effet de renforcement.

1-2.2. Autre charge renforçante minoritaire

La composition selon l'invention peut comprendre une charge renforçante complémentaire à la silice de très haute surface spécifique, de manière minoritaire en poids.

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 170 m2/g, plus préférentiellement comprise entre 60 et 170 m2/g.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

D'une manière préférentielle, le taux de charge renforçante totale (incluant la silice de très haute surface spécifique) est de 30 à 200 pce, plus préférentiellement de 45 à 170 pce et de manière très préférentielle, de 50 à 150 pce. En dessous de 30 pce de charge, la composition pourrait être moins performante en résistance à l'usure tandis qu'au-dessus de 200 pce de charge, la composition pourrait être moins performante en résistance au roulement.

Selon un mode de réalisation, la composition comprend du noir de carbone, comme charge minoritaire. Dans ce cas, le taux de noir est préférentiellement compris entre 0 et 30 pce. Dans ce mode de réalisation, le taux de noir est préférentiellement compris dans un domaine allant de 1 à 10 pce, de préférence de 1 à 5 pce et préférentiellement inférieur ou égal à 4 pce.

I-2.3. Agents de couplage

Les compositions selon l'invention comprennent un agent de couplage afin de lier la silice aux élastomères.

Ces agents de couplage, bien connus de l'homme du métier, peuvent être par exemple des silanes hydrolysables tels que des alkylalkoxysilanes, ou des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sx - A - Z ,

dans laquelle:

- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après:

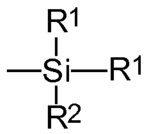 ; 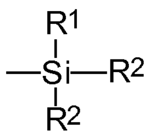 ; 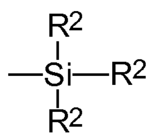 ,

dans lesquelles:

- les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
- les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 2 et 20 pce, plus préférentiellement entre 3 et 15 et encore plus préférentiellement entre 4 et 12 pce.

I-3 Système de vulcanisation

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

I-4 Combinaison de plastifiants

La composition selon l'invention comporte en outre une combinaison de plastifiants ou système plastifiant. Cette combinaison de plastifiant est composée au moins d'une résine hydrocarbonée de faible Tg. En plus de ce premier agent plastifiant, la composition peut comprendre de manière optionnelle une huile plastifiante et/ou une résine hydrocarbonée de haute Tg.

Préférentiellement, le taux total de plastifiant dans la composition est supérieur ou égal à 25 pce, plus préférentiellement supérieur ou égal à 30 pce, de préférence de 45 à 120 pce, en particulier de 50 à 100 pce, par exemple de 50 à 90 pce. En dessous de 30 pce, et surtout en dessous de 25 pce de plastifiant, la composition pourrait être moins performante quant à la processabilité industrielle.

1-4-1 Résine de faible Tg

La combinaison de plastifiant de la composition de l'invention comprend au moins une résine hydrocarbonée visqueuse à 20 °C, dit à « faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :

- une Tg comprise entre -40°C et 0°C, plus préférentiellement entre -30°C et 0°C et plus préférentiellement encore entre -20°C et 0°C ;

- une masse moléculaire moyenne en nombre (Mn) inférieure à 800 g/mol, de préférence inférieure à 600 g/mol et plus préférentiellement inférieure à 400 g/mol ;

- un point de ramollissement compris dans un domaine allant de 0 à 50°C, préférentiellement de 0 à 40°C, plus préférentiellement de 10 à 40°C, de préférence de 10 à 30°C ;

- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de faible Tg présente l'ensemble des caractéristiques préférentielles ci-dessus.

Le point de ramollissement est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de

polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alpha-pinène, betapinène, dipentène ou polylimonène.

Les résines préférentielles ci-dessus sont bien connues de l'homme du métier et disponibles commercialement, par exemple vendues en ce qui concerne les :

a. résines aliphatiques : par la société CRAY VALLEY sous la dénomination « Wingtack 10» (Mn=480 g/mol ; Mw=595 g/mol ; Ip=1.2 ; SP=10°C; Tg=-28°C),

b. résines coumarone indène : par la société Rütgers Chemicals sous la dénomination « Novares C30 » (Mn=295 g/mol ; Mw=378 g/mol ; Ip=1.28 ; SP=25°C ; Tg=-19°C) ;

c. résines de coupe C9 aliphatique et aromatique : par la société Rütgers Chemicals sous la dénomination « Novares TT30 » (Mn=329 g/mol ; Mw=434 g/mol ; Ip=1.32 ; SP=25°C ; Tg=-12°C).

Le taux de résine plastifiante hydrocarbonée de faible Tg est compris dans un domaine allant de 25 à 90 pce. En effet, en dessous de 15 pce de résine de faible Tg, la composition pourrait présenter des problèmes de collant et donc de processabilité industrielle.

I-4-2 Huile plastifiante

Optionnellement, la combinaison de plastifiant de la composition de l'invention comprend une huile d'extension (ou résine plastifiante) liquide à 20 °C, dit à « basse Tg », c'est-à-dire qui par définition présente une Tg inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire

choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Préférentiellement, le taux d'huile d'extension est compris entre 2 et 50 pce, plus préférentiellement entre 5 et 30 pce, encore plus préférentiellement entre 10 et 30 pce. En dessous de 2 pce d'huile ou au-dessus de 50 pce d'huile, la composition pourrait être moins performante en adhérence, de par une Tg du mélange trop haute ou trop basse.

I-4-3 Résine de haute Tg

Optionnellement, la combinaison de plastifiant peut contenir également une résine hydrocarbonée thermoplastique dont la Tg est supérieure à 20°C. Cette résine est un solide à température ambiante (23°C), par opposition à un composé plastifiant liquide tel qu'une huile ou visqueux tel qu'une résine de faible Tg.

De préférence, la résine plastifiante hydrocarbonée thermoplastique présente au moins une quelconque des caractéristiques suivantes :

- une Tg supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950

g/mol ; Ip=1,5 ; Tg=70°C) ;

- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;

- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon un mode particulier de réalisation de l'invention, lorsqu'elle est incluse dans la composition, le taux de résine plastifiante hydrocarbonée est compris dans un domaine allant de 5 à 80 pce, préférentiellement allant de 7 à 70 pce, encore plus préférentiellement de 10 à 65 pce. Préférentiellement également, le taux de résine plastifiante est compris dans un domaine allant de 5 à 20 pce, et plus préférentiellement de 5 à 15 pce.

I-5 Rapport des taux de charge et de plastifiant

De préférence selon l'invention, les taux de charge renforçante et de plastifiant sont tels que le rapport du taux total de charge et du taux total de plastifiant est compris dans un domaine allant de 1,3 à 2. En dessous de 1,3 la composition pourrait présenter une moindre dureté entrainant une moindre performance de comportement véhicule tandis qu'au-dessus de 2 la composition pourrait présenter un fort mooney entrainant une moindre processabilité industrielle.

De préférence, le rapport du taux total de charge et du taux total de plastifiant est compris dans un domaine allant de 1,3 à 1,8 et de préférence de 1,4 à 1,7.

I-6 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

## III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

*-Essais de traction (après cuisson) :*

Ces essais permettent de déterminer les contraintes d'élasticité et les propriétés à la rupture. Sauf indication différente, ils sont basés sur la norme NF ISO 37 de décembre 2005. On mesure en seconde élongation (i.e. après un cycle d'accommodation) les modules sécants dits "nominaux" (ou contraintes apparentes, en MPa, rapportées à la déformation, sans unité) à 10% d'allongement ("MA10"). Toutes ces mesures de traction sont effectuées dans les conditions normales d'hygrométrie (50±10% d'humidité relative), à 100°C. Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

La valeur de MA10 mesurée à 100°C est un bon indicateur de la stabilité de conduite du véhicule (comportement routier), plus la valeur est élevée, meilleure est la performance. Pour plus de lisibilité les résultats seront indiqués selon la performance, en base 100, la valeur 100 étant attribuée au témoin. Un résultat inférieur à 100 indiquant une diminution de la performance de stabilité de conduite (diminution de la valeur de MA10 à 100°C), et inversement, un résultat supérieur à 100, indiquera une augmentation de la performance (augmentation de la valeur de MA10 à 100°C).

- Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions variables de température, notamment à 23°C et 100°C selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 50% de déformation (effet Payne).

Pour la valeur de tan(δ)max à 100°C, plus la valeur est élevée, plus la composition permettra une bonne adhérence sur sol sec. Pour plus de lisibilité les résultats seront indiqués selon la performance, en base 100, la valeur 100 étant attribuée au témoin. Un résultat inférieur à 100 indiquant une diminution de la performance d'adhérence sur sol sec (diminution de la valeur de tan(δ)max à 100°C), et inversement, un résultat supérieur à 100, indiquera une augmentation de la performance (augmentation de la valeur de tan(δ)max à 100°C).

Pour la valeur de tan(δ)max à 23°C, plus la valeur est basse, plus la composition aura une hystérèse faible et donc une résistance au roulement faible. Pour plus de lisibilité les résultats seront indiqués selon la performance, en base 100, la valeur 100 étant attribuée au témoin. Un résultat inférieur à 100 indiquant une diminution de la performance de résistance au roulement (augmentation de la valeur de tan(δ) max à 23°C), et inversement, un résultat supérieur à 100, indiquera une augmentation de la performance (diminution de la valeur de tan(δ)max à 23°C).

III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans les tableaux 1 à 4 ont pour objet de comparer les différentes propriétés de caoutchouterie de compositions témoins (T1 à T12) aux compositions C1 à C4 conformes à l'invention.

Par rapport aux compositions témoins, on note que les compositions conformes à l'invention présentent le meilleur compromis de performances entre le module, et les mesures de Tan(δ)max à 23°C et 100°C. Ces résultats montrent que les compositions de l'invention permettent de bonnes performances sur les aspects essentiels que sont le comportement routier, l'adhérence sur sol sec, et la résistance au roulement. Aucune des compositions témoin ne permet un aussi bon compromis de toutes ces performances à la fois.

Tableau 1

| | T1 | T2 | T3 | C1 |
|---|---|---|---|---|
| SBR (1) | 80 | 80 | 80 | 80 |
| BR (2) | 20 | 20 | 20 | 20 |
| Noir (3) | 4 | 4 | 4 | 4 |
| Silice de CTAB environ 160 $m^2/g$ (4) | 90 | 90 | 0 | 0 |
| Silice de CTAB environ 200 $m^2/g$ (5) | 0 | 0 | 90 | 90 |
| Résine plastifiante de Haute Tg (6) | 45 | 13 | 45 | 13 |
| Résine plastifiante de Basse Tg (7) | 0 | 32 | 0 | 32 |
| Huile plastifiante végétale (8) | 10 | 10 | 10 | 10 |
| Agent de couplage (9) | 7.2 | 7.2 | 7.2 | 7.2 |
| Cire | 2 | 2 | 2 | 2 |
| Antioxydant (10) | 2 | 2 | 2 | 2 |
| Acide stéarique | 3 | 3 | 3 | 3 |
| Accélérateur (11) | 4 | 4 | 4 | 4 |
| Activateur (12) | 2 | 2 | 2 | 2 |
| Soufre | 1 | 1 | 1 | 1 |
| ZnO | 1.2 | 1.2 | 1.2 | 1.2 |
| MA10 à 100°C (Performance - base 100) | 100 | 101 | 109 | 111 |
| tan(δ) max 100°C (Performance - base 100) | 100 | 90 | 104 | 103 |
| tan(δ) max 23°C (Performance - base 100) | 100 | 113 | 99 | 110 |
| Moyenne tan(δ) max 23°C et 100°C | 100 | 102 | 102 | 107 |

Dans les tableaux 1 à 4, les composants des compositions référencés 1 à 12 représentent les composants ci-dessous.

(1) SBR avec 26% de motif styrène et 24% de motif 1,2 de la partie butadiénique (Tg = -48°C) ;

(2) BR : polybutadiène avec 0,5% de motif 1-2 ; 1,2% de motif trans 1-4 ; 98,3% de motif cis 1-4 (Tg = - 108°C) ;

(3) Grade ASTM N234 (société Cabot) ;

(4) Silice « Zeosil 1165 MP » de la société Solvay type « HDS » ;

(5) Silice « Zeosil Premium 200 MP » de la société Solvay ;

(6) Résine hydrocarbonée de haute Tg, de coupe C5/C9 « Wingtack STS » de la société Cray Valley ;

(7) Résine hydrocarbonée de faible Tg « Novares C30 » de la société Rütgers Chemical ;

(8) Trioleate de glycerol, huile de tournesol à 85% en poids d'acide oléique « Lubrirob Tod 1880 » de la société Novance ;

(9) Agent de couplage : « Si69 » de la société Evonik - Degussa ;

(10) N-(1,3-diméthylbutyl)-N'-phényl-p-phénylènediamine (Santoflex 6-PPD) de la société Flexsys et Cire anti-ozone ;

(11) N-cyclohexyl-2-benzothiazol-sulfénamide (« Santocure CBS » de la société Flexsys) ;

(12) Diphénylguanidine « Perkacit DPG » de la société Flexsys.

Tableau 2

| | T4 | T5 | T6 | C2 |
|---|---|---|---|---|
| SBR (1) | 100 | 100 | 100 | 100 |
| Noir (3) | 4 | 4 | 4 | 4 |
| Silice de BET environ 160 $m^2/g$ (4) | 50 | 50 | 0 | 0 |
| Silice de BET environ 200 $m^2/g$ (5) | 0 | 0 | 50 | 50 |
| Résine plastifiante de Haute Tg (6) | 30 | 0 | 30 | 0 |
| Résine plastifiante de Basse Tg (7) | 0 | 30 | 0 | 30 |
| Agent de couplage (9) | 4 | 4 | 4 | 4 |
| Cire | 2 | 2 | 2 | 2 |
| Antioxydant (10) | 2 | 2 | 2 | 2 |
| Acide stéarique | 3 | 3 | 3 | 3 |
| Accélérateur (11) | 4 | 4 | 4 | 4 |
| Activateur (12) | 2 | 2 | 2 | 2 |
| Soufre | 1 | 1 | 1 | 1 |
| ZnO | 1.2 | 1.2 | 1.2 | 1.2 |
| MA10 à 100°C (Performance - base 100) | 100 | 108 | 111 | 113 |
| tan($\delta$) max 100°C (Performance - base 100) | 100 | 91 | 110 | 98 |
| tan($\delta$) max 23°C (Performance - base 100) | 100 | 125 | 104 | 125 |
| Moyenne tan($\delta$) max 23°C et 100°C | 100 | 108 | 107 | 112 |

Tableau 3

| | T7 | T8 | T9 | C3 |
|---|---|---|---|---|
| SBR (1) | 100 | 100 | 100 | 100 |
| Noir (3) | 4 | 4 | 4 | 4 |
| Silice de BET environ 160 $m^2/g$ (4) | 140 | 140 | 0 | 0 |
| Silice de BET environ 200 $m^2/g$ (5) | 0 | 0 | 140 | 140 |
| Résine plastifiante de Haute Tg (6) | 65 | 10 | 65 | 10 |
| Résine plastifiante de Basse Tg (7) | 0 | 80 | 0 | 80 |
| Huile plastifiante végétale (8) | 25 | 0 | 25 | 0 |
| Agent de couplage (9) | 11.2 | 11.2 | 11.2 | 11.2 |
| Cire | 2 | 2 | 2 | 2 |
| Antioxydant (10) | 2 | 2 | 2 | 2 |
| Acide stéarique | 3 | 3 | 3 | 3 |
| Accélérateur (11) | 4 | 4 | 4 | 4 |
| Activateur (12) | 2 | 2 | 2 | 2 |
| Soufre | 1 | 1 | 1 | 1 |
| ZnO | 1.2 | 1.2 | 1.2 | 1.2 |
| MA10 à 100°C (Performance - base 100) | 100 | 133 | 123 | 170 |
| tan($\delta$) max 100°C (Performance - base 100) | 100 | 81 | 100 | 96 |
| tan($\delta$) max 23°C (Performance - base 100) | 100 | 109 | 107 | 120 |
| Moyenne tan($\delta$) max 23°C et 100°C | 100 | 95 | 104 | 108 |

Tableau 4

| | T10 | T11 | T12 | C4 |
|---|---|---|---|---|
| SBR (1) | 100 | 100 | 100 | 100 |
| Noir (3) | 4 | 4 | 4 | 4 |
| Silice de BET environ 160 $m^2/g$ (4) | 90 | 90 | 0 | 0 |
| Silice de BET environ 200 $m^2/g$ (5) | 0 | 0 | 90 | 90 |
| Résine plastifiante de Haute Tg (6) | 45 | 13 | 45 | 13 |
| Résine plastifiante de Basse Tg (7) | 0 | 32 | 0 | 32 |
| Huile plastifiante végétale (8) | 10 | 10 | 10 | 10 |
| Agent de couplage (9) | 7.2 | 7.2 | 7.2 | 7.2 |
| Cire | 2 | 2 | 2 | 2 |
| Antioxydant (10) | 2 | 2 | 2 | 2 |
| Acide stéarique | 3 | 3 | 3 | 3 |
| Accélérateur (11) | 4 | 4 | 4 | 4 |
| Activateur (12) | 2 | 2 | 2 | 2 |
| Soufre | 1 | 1 | 1 | 1 |
| ZnO | 1.2 | 1.2 | 1.2 | 1.2 |

(suite)

| | T10 | T11 | T12 | C4 |
|---|---|---|---|---|
| MA10 à 100°C (Performance - base 100) | 100 | 112 | 113 | 116 |
| tan(δ) max 100°C (Performance - base 100) | 100 | 98 | 114 | 109 |
| tan(δ) max 23°C (Performance - base 100) | 100 | 110 | 97 | 111 |
| Moyenne tan(δ) max 23°C et 100°C | 100 | 104 | 106 | 110 |

**Revendications**

1. Composition de caoutchouc à base d'au moins un élastomère diénique, une charge renforçante, un système de vulcanisation et un système plastifiant, ladite charge renforçante comprenant majoritairement en poids une silice dite de très haute surface spécifique, de surface spécifique CTAB, déterminée selon la norme française NF T 45-007 de novembre 1987 (méthode B), supérieure à 170 $m^2/g$ et ledit système plastifiant comprenant un taux compris dans un domaine allant de 25 à 90 pce (parties en poids pour cent parties en poids d'élastomère) d'une résine hydrocarbonée présentant une température de transition vitreuse (Tg), mesurée selon la norme ASTM D3418 (1999), comprise entre -40°C et 20°C.

2. Composition selon la revendication 1 dans laquelle le taux de charge renforçante est compris dans un domaine allant de 30 à 200 pce, de préférence de 45 à 170 pce, mieux, de 50 à 150 pce.

3. Composition selon l'une quelconque des revendications précédentes dans laquelle le taux de silice de très haute surface spécifique est compris dans un domaine allant de 25 à 180 pce, de préférence de 40 à 160 pce, mieux, de 50 à 140 pce.

4. Composition selon l'une quelconque des revendications précédentes dans laquelle la silice de très haute surface spécifique présente une surface spécifique CTAB comprise dans un domaine allant de 170 à 250 $m^2/g$, de préférence de 180 à 240 $m^2/g$.

5. Composition selon l'une quelconque des revendications précédentes dans laquelle la silice de très haute surface spécifique présente une taille moyenne (en masse) de particules, notée dw, comprise dans un domaine allant de 20 à 300 nm, de préférence de 40 à 150 nm.

6. Composition selon l'une quelconque des revendications précédentes dans laquelle la silice de très haute surface spécifique présente une distribution de taille de particules dw telle que $dw \geq (16\,500 / CTAB) - 30$.

7. Composition selon l'une quelconque des revendications précédentes dans laquelle la silice de très haute surface spécifique présente une porosité vérifiant le critère $L / IF \geq -0{,}0025\ CTAB + 0{,}85$.

8. Composition selon l'une quelconque des revendications précédentes comprenant du noir de carbone comme charge renforçante minoritaire.

9. Composition selon l'une quelconque des revendications précédentes dans laquelle la résine hydrocarbonée précédemment mentionnée comme résine hydrocarbonée de Tg comprise entre -40°C et 20°C présente une Tg comprise entre - 40°C et 0°C, plus préférentiellement entre -30°C et 0°C et plus préférentiellement encore entre -20°C et 0°C.

10. Composition selon l'une quelconque des revendications précédentes dans laquelle la résine hydrocarbonée précédemment mentionnée comme résine hydrocarbonée de Tg comprise entre -40°C et 20°C présente une masse moléculaire moyenne en nombre inférieure à 800 g/mol, de préférence inférieure à 600 g/mol.

11. Composition selon l'une quelconque des revendications précédentes comprenant en outre dans le système plastifiant une huile plastifiante.

12. Composition selon l'une quelconque des revendications précédentes comprenant en outre dans la combinaison de

plastifiants, une résine de Tg supérieur à 20°C.

**13.** Composition selon l'une quelconque des revendications précédentes dans laquelle le taux total de plastifiants est supérieur ou égal à 25 pce, de préférence compris dans un domaine allant de 45 à 120 pce.

**14.** Pneumatique comprenant une composition selon l'une quelconque des revendications 1 à 13.

## Patentansprüche

**1.** Kautschukzusammensetzung auf Basis von mindestens einem Dienelastomer, einem verstärkenden Füllstoff, einem Vulkanisationssystem und einem Weichmachersystem, wobei der verstärkende Füllstoff gewichtsbezogen hauptsächlich eine Kieselsäure mit sehr hoher spezifischer Oberfläche mit einer gemäß der französischen Norm NF T 45-007 vom November 1987 (Methode B) bestimmten spezifischen CTAB-Oberfläche von mehr als 170 $m^2/g$ umfasst und wobei das Weichmachersystem einen Gehalt eines Kohlenwasserstoffharzes mit einer gemäß den ASTM-Norm D3418 (1999) gemessenen Glasübergangstemperatur (Tg) zwischen -40 °C und 20 °C in einem Bereich von 25 bis 90 phe (Gewichtsteile pro 100 Gewichtsteile Elastomer)umfasst.

**2.** Zusammensetzung nach Anspruch 1, wobei der Gehalt an verstärkendem Füllstoff in einem Bereich von 30 bis 200 phe, vorzugsweise von 45 bis 170 phe und noch besser von 50 bis 150 phe liegt.

**3.** Zusammensetzung nach einem der vorhergehenden Ansprüche, wobei der Gehalt an Kieselsäure mit sehr hoher spezifischer Oberfläche in einem Bereich von 25 bis 180 phe, vorzugsweise von 40 bis 160 phe und noch besser von 50 bis 140 phe liegt.

**4.** Zusammensetzung nach einem der vorhergehenden Ansprüche, wobei die Kieselsäure mit sehr hoher Oberfläche eine spezifische CTAB-Oberfläche in einem Bereich von 170 bis 250 $m^2/g$ und vorzugsweise von 180 bis 240 $m^2/g$ aufweist.

**5.** Zusammensetzung nach einem der vorhergehenden Ansprüche, wobei die Kieselsäure mit sehr hoher Oberfläche eine (massen)mittlere Teilchengröße dw in einem Bereich von 20 bis 300 nm und vorzugsweise von 40 bis 150 nm aufweist.

**6.** Zusammensetzung nach einem der vorhergehenden Ansprüche, wobei die Kieselsäure mit sehr hoher Oberfläche eine solche Verteilung der Teilchengröße dw aufweist, dass dw ≥ (16.500/CTAB)-30.

**7.** Zusammensetzung nach einem der vorhergehenden Ansprüche, wobei die Kieselsäure mit sehr hoher Oberfläche eine Porosität aufweist, die das Kriterium L/IF ≥ -0,0025 CTAB + 0,85 erfüllt.

**8.** Zusammensetzung nach einem der vorhergehenden Ansprüche, umfassend Ruß als nebensächlichen verstärkenden Füllstoff.

**9.** Zusammensetzung nach einem der vorhergehenden Ansprüche, wobei das oben als Kohlenwasserstoffharz mit einer Tg zwischen -40 °C und 20 °C erwähnte Kohlenwasserstoffharz eine Tg zwischen -40 °C und 0 °C, weiter bevorzugt zwischen -30 °C und 0 °C und noch weiter bevorzugt zwischen -20 °C und 0 °C aufweist.

**10.** Zusammensetzung nach einem der vorhergehenden Ansprüche, wobei das oben als Kohlenwasserstoffharz mit einer Tg zwischen -40 °C und 20 °C erwähnte Kohlenwasserstoffharz eine zahlenmittlere Molmasse von weniger als 800 g/mol und vorzugsweise weniger als 600 g/mol aufweist.

**11.** Zusammensetzung nach einem der vorhergehenden Ansprüche, die außerdem in dem Weichmachersystem ein Weichmacheröl umfasst.

**12.** Zusammensetzung nach einem der vorhergehenden Ansprüche, die außerdem in der Kombination von Weichmachern ein Harz mit einer Tg von mehr als 20 °C umfasst.

**13.** Zusammensetzung nach einem der vorhergehenden Ansprüche, wobei der Gesamtgehalt an Weichmachern größer oder gleich 25 phe, und vorzugsweise in einem Bereich von 45 bis 120 phe liegt.

**14.** Reifen, umfassend eine Zusammensetzung nach einem der Ansprüche 1 bis 13.

## Claims

1. Rubber composition based on at least one diene elastomer, a reinforcing filler, a vulcanizing system and a plasticizing system, said reinforcing filler predominantly comprising, by weight, a silica with a very high specific surface area, with a CTAB specific surface area, determined according to French standard NF T 45-007 of November 1987 (method B), greater than 170 $m^2/g$, and said plasticizing system comprising a content in the range from 25 to 90 phr (parts by weight per hundred parts by weight of elastomer) of a hydrocarbon resin having a glass transition temperature (Tg), measured according to standard ASTM D3418 (1999), between -40°C and 20°C.

2. Composition according to claim 1, in which the content of reinforcing filler is in the range from 30 to 200 phr, preferably from 45 to 170 phr, better still from 50 to 150 phr.

3. Composition according to any one of the preceding claims, in which the content of silica having a very high specific surface area is in the range from 25 to 180 phr, preferably from 40 to 160 phr, better still from 50 to 140 phr.

4. Composition according to any one of the preceding claims, in which the silica having a very high specific surface area has a CTAB specific surface area in the range from 170 to 250 $m^2/g$, preferably from 180 to 240 $m^2/g$.

5. Composition according to any one of the preceding claims, in which the silica having a very high specific surface area has an average particle size (by weight), denoted by dw, in the range from 20 to 300 nm, preferably from 40 to 150 nm.

6. Composition according to any one of the preceding claims, in which the silica having a very high specific surface area has a distribution of particle size dw such that dw ≥ (16 500/ CTAB) - 30.

7. Composition according to any one of the preceding claims, in which the silica having a very high specific surface area has a porosity that meets the criterion L / FI ≥ - 0.0025 CTAB + 0.85.

8. Composition according to any one of the preceding claims, comprising carbon black as a minor reinforcing filler.

9. Composition according to any one of the preceding claims, in which the hydrocarbon resin mentioned above as hydrocarbon resin with Tg between -40°C and 20°C has a Tg between -40°C and 0°C, more preferably between -30°C and 0°C and even more preferably between -20°C and 0°C.

10. Composition according to any one of the preceding claims, in which the hydrocarbon resin mentioned above as hydrocarbon resin with Tg between -40°C and 20°C has a number-average molecular weight below 800 g/mol, preferably below 600 g/mol.

11. Composition according to any one of the preceding claims, further comprising a plasticizing oil in the plasticizing system.

12. Composition according to any one of the preceding claims, further comprising a resin with Tg above 20°C in the combination of plasticizers.

13. Composition according to any one of the preceding claims, in which the total level of plasticizers is greater than or equal to 25 phr, preferably in the range from 45 to 120 phr.

14. Tyre comprising a composition according to any one of Claims 1 to 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 0005300 A
- WO 0005301 A
- WO 2003016387 A
- WO 2005087859 A
- WO 2006061064 A
- JP 2005213486 B
- US 20070167557 A
- JP 2001144262 B
- EP 2740757 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 11042507 A
- WO 9736724 A
- WO 9916600 A
- WO 2006069792 A
- WO 2006069793 A
- WO 2008003434 A
- WO 2008003435 A
- EP 0735088 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 02088238 A
- EP 0501227 A
- EP 0810258 A

### Littérature non-brevet citée dans la description

- **BRUNAUER ; EMMETT ; TELLER.** *The Journal of the American Chemical Society,* Février 1938, vol. 60, 309